# EUROPEAN PATENT APPLICATION

(11) **EP 4 674 376 A1**
(43) Date of publication of application: **07.01.2026**
(21) Application number: 25165190.7
(22) Date of filing: 20.03.2025
(51) Int. Cl.: A61C 9/00, A61C 13/34

(54) **DENTAL SURVEYOR AND SURVEYING METHOD THEREFOR**

(30) Priority: 21.03.2024 TW 113110572
(71) Applicant: Shih, Jui-Yuan, Lukang Township, Changhua County (TW)
(72) Inventor: Shih, Jui-Yuan, Lukang Township, Changhua County (TW)
(74) Representative: Lang, Christian

(57) **Abstract**

A dental surveyor comprising a surveyor and a surveying table is provided. The surveyor comprises a platform, a stand column, a first surveying arm, a second surveying arm, and a vertical spindle. The stand column, the first surveying arm, and the second surveying arm are pivotally connected with each other. The second surveying arm is equipped with a vertical spindle having a stroke needle for surveying a cast. The surveying table comprises a cast holder and an adjustment seat. The surveying table is mounted on the platform. The cast holder is used for clamping the cast. The angle and orientation of the cast holder can be changed by use of the adjustment seat. Three screws are locked on the adjustment seat. By moving the screws forward and backward, the heights of the corresponding positions of the cast holder are changed, achieving the effect of three-point positioning and adjustment on the cast and a precise adjustment of the cast angle.

## Description

### BACKGROUND of INVENTION

### 1. Field of Invention

The present invention relates to a dental surveyor and a surveying method therefor, particularly to a dental surveyor for surveying and modifying dental casts quickly and a surveying method for determining, recording, and reproducing the path of insertion and removal of a cast on the dental surveyor.

### 2. Description of the Related Art

A person has only one set of permanent teeth in his life. Once they are damaged, they cannot be replaced for the rest of his life. As the average life expectancy of the people increases, dental health issues also need to be taken seriously. There are many dental abnormalities and diseases. The most common ones are caries, periodontal disease, or teeth removed before aging due to external forces. The vacancies caused by tooth removal will affect the health of the adjacent teeth. Due to the loss of support from the adjacent teeth, the teeth surrounding the damaged tooth will gradually loosen and fall out, which is a vicious cycle for all teeth. Therefore, dentures need to be used in time. The conventional dentures include costly implants, fixed bridges, fixed crowns and removable partial dentures. Because each person's tooth shape, mouth shape, and gums are different, it is necessary to obtain the patient's tooth mould to facilitate the subsequent production of dentures, bridges, crowns, and removable partial dentures.

The production of dentures requires the cooperation of doctors and cast technicians, and dental bridges, crowns, and removable partial dentures all need to be installed in a specific path of insertion and removal. Once the angle and orientation are wrong, the bridges, crowns, and removable partial dentures cannot be installed smoothly. Therefore, doctors and cast technicians need to confirm whether the angle and orientation of the dental cast are consistent. For this purpose, a dental surveyor is used to perform height confirmation to confirm whether the positioning points on the dental cast are consistent. At the same time, the dental surveyor has an adjustment function so that the cast technician can obtain the same dental cast orientation as the doctor's instructions when designing, thereby avoiding installation angle problems caused during the subsequent processing of dentures, bridges, crowns, and removable partial dentures.

In order to improve the efficiency of doctors' design and cast technicians' processing, it is also necessary to speed up the surveying and positioning of a dental cast. Under the premise that the accuracy and error values are allowed, the positioning points on a dental cast can be surveyed by the dental surveyor so that the angles and orientations of the dental casts doctors and cast technicians can be confirmed to be consistent, thereby reducing the pre-preparation work and time waste and thus improving the efficiency.

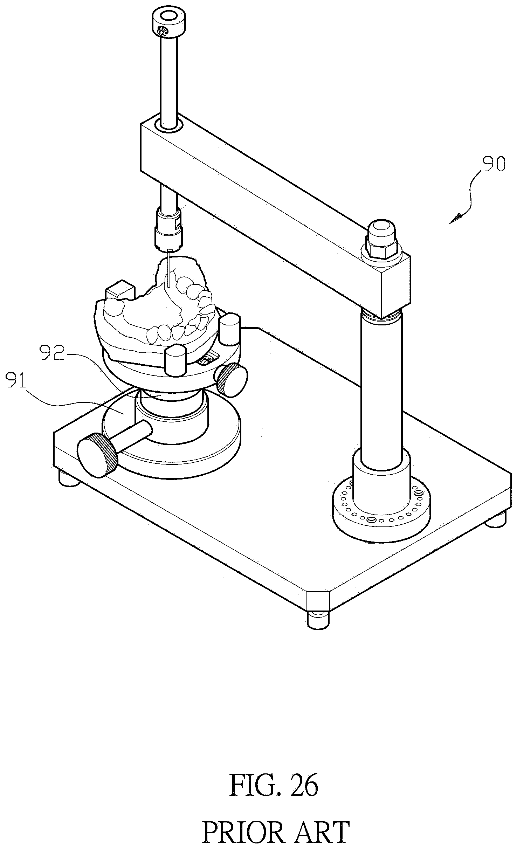

As shown in FIG. 26, a surveyor table 91 of a conventional dental surveyor 90 has only one ball joint 92. When determining, recording, and reproducing the path of insertion and removal of a cast on the conventional dental surveyor 90, it is common that another direction is determined only when one direction is determined. However, when determining another direction, the movement of the ball joint 92 may cause the originally determined direction to change. When re-tripoding the cast on the conventional dental surveyor 90, the following situation happens quite often: When two points have been adjusted to be at the same height and the height of another point is being adjusted, the movement of the ball joint 92 will cause a change of the relationship between the two points there were originally at the same height, thereby making it quite difficult to determine, record, and reproduce the path of insertion and removal of a cast on a conventional dental surveyor 90, and also causing the denture to be made imprecisely, affecting the use effect of the patient.

### SUMMARY OF THE INVENTION

An objective of present invention is to provide a dental surveyor and a surveying method therefor to remedy the deficiencies mentioned in the description of the related art.

To achieve these and other objects of the present invention, a dental surveyor comprising a surveyor and a surveying table is provided. The surveyor comprises a platform, a stand column, a first surveying arm, a second surveying arm, and a vertical spindle. The stand column is locked on the platform. The first surveying arm is pivotally connected to the stand column, and the second surveying arm is pivotally connected to the first surveying arm. Thus, the stand column, the first surveying arm, and the second surveying arm are pivotally connected with each other. The second surveying arm is equipped with a vertical spindle having a stroke needle for surveying a cast. The surveying table comprises a cast holder and an adjustment seat. The surveying table is mounted on the platform. The cast holder is used for clamping the cast and provided with a clamp adjusting knob for adjusting the clamping strength. A swivel ball is arranged at the bottom of the cast holder, and a fine adjustment member is arranged in the middle of the adjustment seat. A fine adjustment rotating knob is screwed on the fine adjustment member, and the swivel ball is clamped on the fine adjustment member. By rotating the fine adjustment rotating knob, the fine adjustment member can be loosened to adjust the swivel ball. The angle and orientation of the cast holder can be changed in accordance with the adjustment of the swivel ball. A swivel ball housing is provided at the top of the adjustment seat to confine the position of the swivel ball. A first adjustment screw, a second adjustment screw, and a third adjustment screw are locked on the adjustment seat. By moving the first adjustment screw, the second adjustment screw, or the third adjustment screw forward and backward, the heights of those positioning points of the dental cast clamped on the cast holder, which positioning points correspond to the first adjustment screw, the second adjustment screw, or the third adjustment screw, are changed to achieve the effect of a three-point positioning and adjustment.

Furthermore, the stand column is locked on the platform. A pivot pin is arranged at the top of the stand column. An axis hole and a first bearing hole are formed on the first surveying arm in such a way that they go completely through the first surveying arm. A first insertion hole and a second insertion hole are bored respectively on a side of the axis hole and the first bearing hole. The pivot pin of the stand column is inserted in the axis hole. A second bearing hole and a vertical spindle hole are formed on the second surveying arm in such a way that they go completely through the second surveying arm. A third insertion hole and three fourth insertion holes are bored respectively on a side of the second bearing hole and the vertical spindle hole. A spindle bushing is mounted in the vertical spindle hole. A plurality of ball point set screws is locked in the fourth insertion holes to fit the spindle bushing in the fourth insertion holes. The vertical spindle is inserted in the spindle bushing and can be equipped with a stroke needle for surveying a dental cast. A stop portion is locked at the top of the vertical spindle in such a way that the stop portion abuts on the spindle bushing to confine the movement range of the vertical spindle. The ball point set screws are locked respectively in the upper and lower fourth insertion holes. The ball point set screws apply an average pressure on the vertical spindle to eliminate the tolerance of the vertical spindle in the spindle bushing to improve the accuracy. A locking screw is locked in middle fourth insertion hole in such a way that the locking screw abuts on the vertical spindle. By tightening or loosen the locking screw, the position of the vertical spindle can be adjusted and fixed. A slide bushing is inserted into each of the first and second bearing holes. A fulcrum pin is inserted through the two slide bushings. A set screw is locked in the second insertion hole in such a way that the set screw abuts against the fulcrum pin to fix the fulcrum pin, so that the stand column, the first surveying arm, and the second surveying arm can pivot relative to each other. The first surveying arm is locked on the first insertion hole and the pivot pin by means of a clamping threaded lever and is used for adjusting and fixing the angle between the stand column and the first surveying arm. The second surveying arm is locked on the third insertion hole by means of a clamping threaded lever in such a way that the second surveying arm abuts against the fulcrum pin. The second surveying arm is used for adjusting and fixing the angle between the first surveying arm and the second surveying arm. A screw cap is arranged at the top of each of the pivot pin and the fulcrum pin to confine the position of these tops. The first and second surveying arms are respectively provided with a plurality of washers and a plurality of bearings to enhance the smoothness of the pivot, so as to achieve a mutually pivoting linkage relationship between the stand column, the first surveying arm, the second surveying arm, and the vertical spindle, and to maintain precise parallelism and verticality.

To achieve these and other objects of the present invention, a surveying method for accurately determining the path of insertion and removal of a cast on the dental surveyor is provided. The method is carried out with the following steps: the angle and orientation of the dental cast are adjusted using the fine adjustment rotating knob to preliminarily determine the front-back and left-right inclinations of the cast, so that the front-back and left-right orientations of the cast are respectively close to the first adjustment screw, the second adjustment screw, and the third adjustment screw. Therefore, it can be ensured that the front-back and left-right orientations of the cast can be accurately adjusted by adjusting the first adjustment screw, the second adjustment screw, and the third adjustment screw, thereby accurately determining the path of insertion and removal of the cast.

To achieve these and other objects of the present invention, a surveying method for recording and reproducing the path of insertion and removal of a cast on the dental surveyor is provided. The method is carried out with the following steps: After surveying the cast on the dental surveyor, the dentist determines the orientation and inclination of the cast, i.e., the path of insertion and removal. Subsequently, the dentist uses the tripoding method to select three separate contour points on the surface of the cast, i.e., a first positioning point, a second positioning point, and a third positioning point. The dentist hands the cast to a dental cast technician to reproduce the path of insertion and removal of the cast and manufacture a corresponding denture. Before manufacturing the denture, the cast technician must reproduce the path of insertion and removal of the cast determined by the dentist on the dental surveyor. The cast technician adjusts the position and angle of the cast on the dental surveyor in such a way that the first positioning point, the second positioning point, and the third positioning point are finally located at the same height. In this way, the path of insertion and removal of the cast is reproduced.

To achieve these and other objects of the present invention, a method for repositioning the path of insertion and removal of a cast on the dental surveyor is provided. The method is carried out with the following steps to achieve the result that the chosen contour points on the surface of the cast, i.e., a first positioning point, a second positioning point, and a third positioning point, are finally located at the same height. Step 1: Preliminary calibration: the first positioning point, the second positioning point, and the third positioning point form a triangle; the cast is fine-adjusted by means of the fine adjustment rotating knob in such a way that the first positioning point, the second positioning point, and the third positioning point in the adjusted angle and orientation of the cast are respectively close to the first adjustment screw, the second adjustment screw, and the third adjustment screw, and at the same time the first positioning point, the second positioning point, and the third positioning point are at the same height as far as possible. Step 2: Accurate calibration: First, using the second adjustment screw as a reference, use the tip of the stroke needle to measure the height of the second positioning point, and adjust the first adjustment screw to adjust the height of the first positioning point so that the first positioning point is at the same height as the second positioning point; confirm the height with the stroke needle, then adjust the third adjustment screw to adjust the height of the third positioning point so that the first positioning point is at the same height as the third positioning point; adjust the first adjustment screw to adjust the height of the first positioning point so that the first positioning point is at the same height as the second positioning point. After repeated adjustments, the first positioning point, the second positioning point, and the third positioning point are at the same height, enabling the cast to be in the correct angle and orientation.

The main object of the present invention is to provide a dental surveyor at which the angle and orientation of the cast can be adjusted by means of the adjustment seat, so that the first positioning point, the second positioning point, and the third positioning point can be preliminarily brought close to the first adjustment screw, the second adjustment screw, and the third adjustment screw, respectively, so as to quickly complete the preliminary calibration, and the local height of the cast can be adjusted by the first adjustment screw, the second adjustment screw, or the third adjustment screw, enabling a quick, intuitive, simple, and accurate three-point positioning. Due to the facts that the stand column, the first surveying arm, and the second surveying arm can pivot with each other and that the stroke needle can quickly measure the height of the first positioning point, the second positioning point, and the third positioning point, the cast can be surveyed efficiently.

The main object of the present invention is to provide a dental surveyor at which it is possible to iteratively approximate between the third positioning point and the second positioning point to reduce the height error after the first positioning point and the second positioning point are adjusted to the same height, so as to quickly bring the first positioning point, the second positioning point, and the third positioning point in a state of equal height, so that the cast is in the correct angle and orientation, which is beneficial to the collaborative work of doctors and dental cast technicians and contributes thus to further improvement of work efficiency.

Other objects, advantages, and novel features of invention will become more apparent from the following detailed description when taken in conjunction with the accompanying drawings.

### BRIEF DESCRIPTION of DRAWINGS

FIG. 1 is a perspective view of a preferred embodiment of a dental surveyor of the present invention.
FIG. 2 is an explosive view of the dental surveyor shown in Fig. 1.
FIG. 3 is an explosive view of a surveying table of the dental surveyor of the present invention.
FIG. 4 is a section view of the dental surveyor shown in Fig. 1.
FIG. 5 is a schematic figure showing that a stroke needle is to be installed and a dental cast is clamped on the cast holder according to the present invention.
FIG. 6 is a schematic figure showing that the surveyor is rotated pivotally to survey a cast according to the present invention.
FIG. 7 is a schematic figure showing adjusting the angle of the cast holder according to the present invention.
FIG. 8 is a schematic figure showing adjusting a partial height of the cast holder by means of adjustment screws according to the present invention.
FIG. 9 is a schematic figure showing adjusting the relative positions of the positioning points and the adjustment screws prior to surveying according to the present invention.
FIG. 10 is a top view showing adjusting the relative positions of the positioning points and the adjustment screws prior to surveying according to the present invention and showing that the positioning points are respectively close to the adjustment screws.
FIG. 11 is a schematic figure showing a dental cast and positioning points according to the present invention.
FIG. 12 is a schematic figure showing the positioning points by projection according to the present invention.
FIG. 13 is a schematic figure showing surveying the first positioning point according to the present invention.
FIG. 14 is a schematic figure showing surveying the second positioning point according to the present invention.
FIG. 15 is a schematic figure showing the first calibration by projection according to the present invention.
FIG. 16 is a schematic figure showing surveying the third positioning point according to the present invention.
FIG. 17 is a schematic figure showing the projection of adjusting the third adjustment screw according to the present invention.
FIG. 18 is a schematic figure showing the second calibration by projection according to the present invention.
FIG. 19 is a schematic figure showing the third calibration by projection according to the present invention.
FIG. 20 is a schematic figure showing adjusting the first adjustment screw according to the present invention.
FIG. 21 is a schematic figure showing the projection of adjusting the first adjustment screw according to the present invention.
FIG. 22 is a schematic figure showing the fourth calibration by projection according to the present invention.

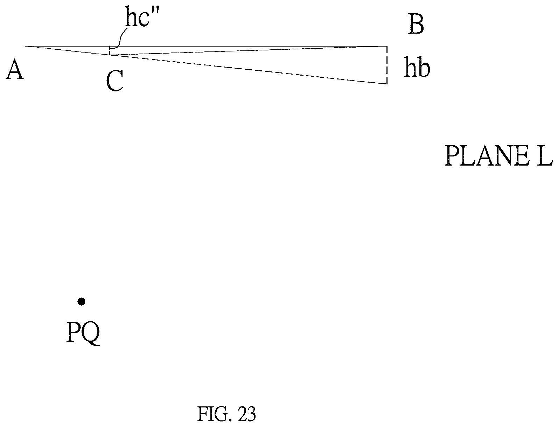

FIG. 23 is an enlarged schematic figure showing the fourth calibration by projection according to the present invention.
FIG. 24 is a first schematic figure showing practically surveying a cast according to the present invention.
FIG. 25 is a second schematic figure showing practically surveying a cast according to the present invention.
FIG. 26 is a perspective view of a conventional dental surveyor.

### DETAILED DESCRIPTION OF THE PREFERRED EMBODIMENT

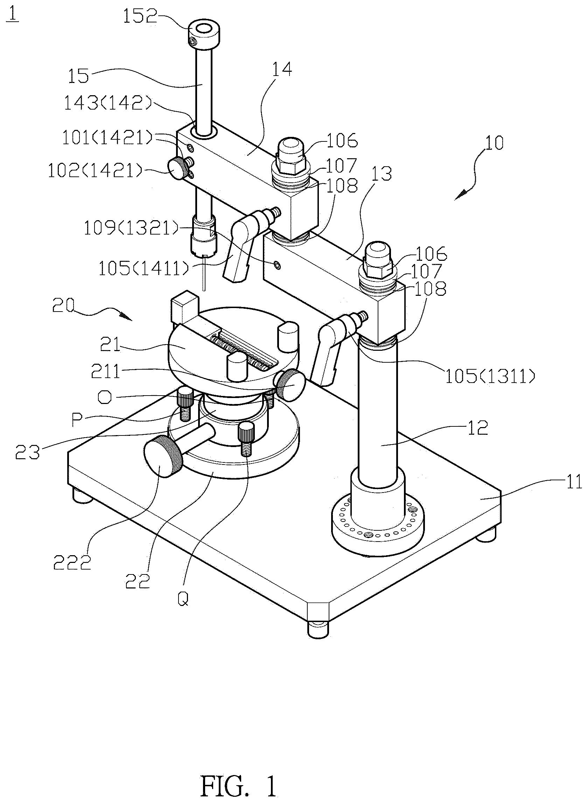

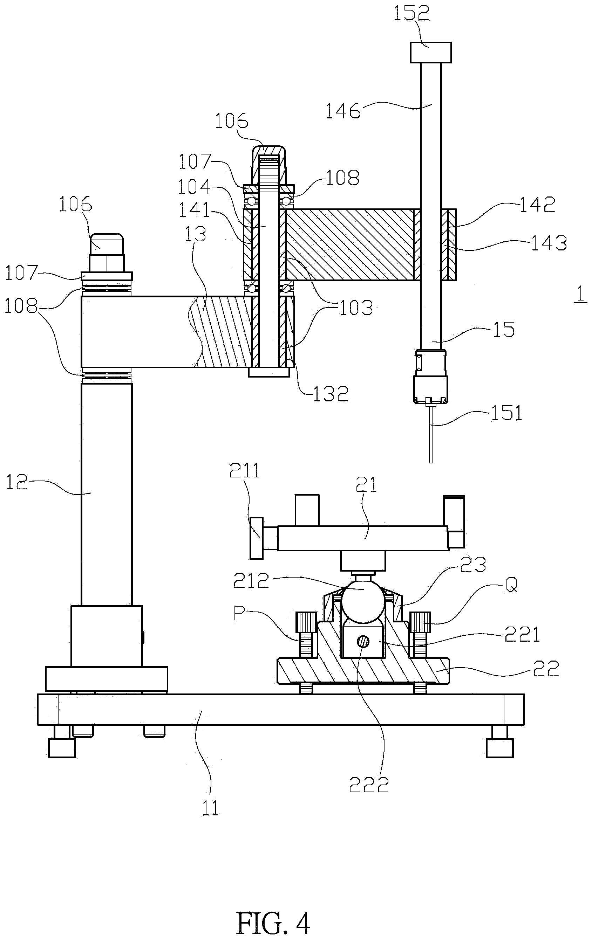

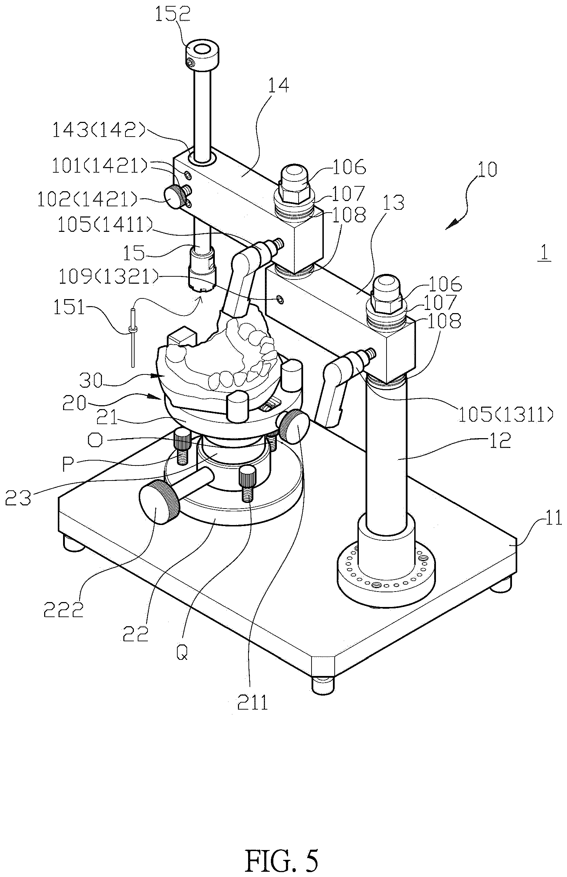

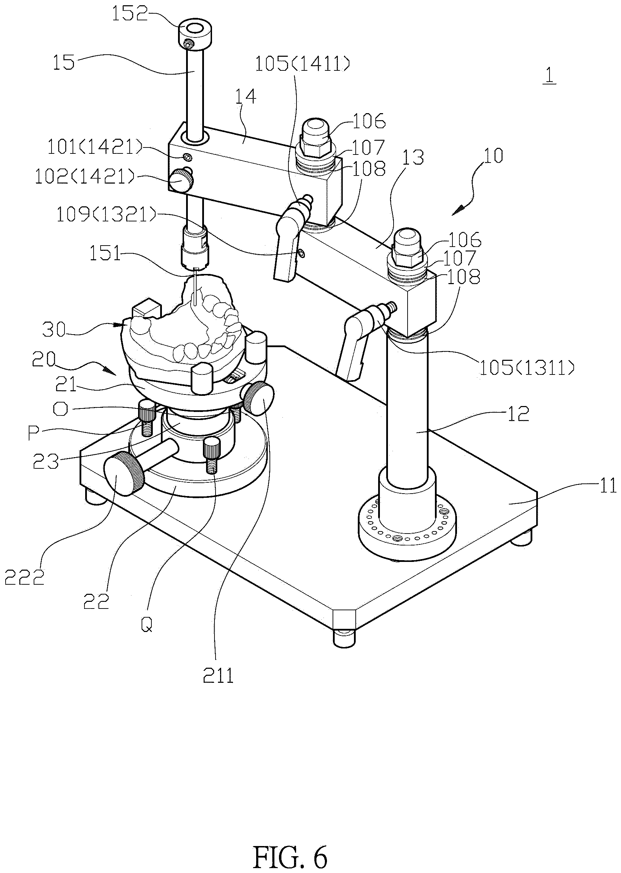

First, please refer to FIG. 1 to FIG. 6, a dental surveyor of the present invention comprises a surveyor 10 and a surveying table 20. In a simplified embodiment, the surveyor 10 comprises a platform 11, a stand column 12, a first surveying arm 13, a second surveying arm 14, and a vertical spindle 15. The stand column 12 is locked on the platform 11. The first surveying arm 13 is pivotally connected to the stand column 12, and the second surveying arm 14 is pivotally connected to the first surveying arm 13. Thus, the stand column 12, the first surveying arm 13, and the second surveying arm 14 are pivotally connected with each other. The second surveying arm 14 is equipped with a vertical spindle 15 having a stroke needle 151 for surveying a cast 30.

In a complete embodiment, the surveyor 10 comprises a platform 11, a stand column 12, a first surveying arm 13, a second surveying arm 14, and a vertical spindle 15. The stand column 12 is locked on the platform 11. A pivot pin 121 is arranged at the top of the stand column 12. An axis hole 131 and a first bearing hole 132 are formed on the first surveying arm 13 in such a way that they go completely through the first surveying arm 13. A first insertion hole 1311 and a second insertion hole 1321 are bored respectively on a side of the axis hole 131 and the first bearing hole 132. The pivot pin 121 of the stand column 12 is inserted in the axis hole 131. A second bearing hole 141 and a vertical spindle hole 142 are formed on the second surveying arm 14 in such a way that they go completely through the second surveying arm 14. A third insertion hole 1411 and three fourth insertion holes 1421 are bored respectively on a side of the second bearing hole 141 and the vertical spindle hole 142. A spindle bushing 143 is mounted in the vertical spindle hole 142. A plurality of ball point set screws 101 is locked in the fourth insertion holes 1421 to fit the spindle bushing 143 in the fourth insertion holes 1421. The vertical spindle 115 is inserted in the spindle bushing 143 and can be equipped with a stroke needle 151 for surveying a dental cast 30. A stop portion 152 is locked at the top of the vertical spindle 15 in such a way that the stop portion 152 abuts on the spindle bushing 143 to confine the movement range of the vertical spindle 15. The ball point set screws 101 are locked respectively in the upper and lower fourth insertion holes 1421. The ball point set screws 101 apply an average pressure on the vertical spindle 15 to eliminate the tolerance of the vertical spindle 15 in the spindle bushing 143 to improve the accuracy. A locking screw 102 is locked in middle fourth insertion hole 1421 in such a way that the locking screw 102 abuts on the vertical spindle 15. By tightening or loosen the locking screw 102, the position of the vertical spindle 15 can be adjusted and fixed. A slide bushing 103 is inserted into each of the first and second bearing holes 132, 141. A fulcrum pin 104 is inserted through the two slide bushings 103. A set screw 109 is locked in the second insertion hole 1321 in such a way that the set screw 109 abuts against the fulcrum pin 104 to fix the fulcrum pin 104, so that the stand column 12, the first surveying arm 13, and the second surveying arm 14 can pivot relative to each other. The first surveying arm 13 is locked on the first insertion hole 1311 and the pivot pin 121 by means of a clamping threaded lever 105 and used for adjusting and fixing the angle between the stand column 12 and the first surveying arm 13. The second surveying arm 14 is locked on the third insertion hole 1411 by means of a clamping threaded lever 105 in such a way that the second surveying arm 14 abuts against the fulcrum pin 104. The second surveying arm 14 is used for adjusting and fixing the angle between the first surveying arm 13 and the second surveying arm 14. A screw cap 106 is arranged at the top of each of the pivot pin 121 and the fulcrum pin 104 to confine the position of these tops. The first and second surveying arms 13, 14 are respectively provided with a plurality of washers 107 and a plurality of bearings 108 to enhance the smoothness of the pivot. The washers 107 are provided to protect the bearings 108 arranged under the washers 107, so as to achieve a mutually pivoting linkage relationship among the stand column 12, the first surveying arm 13, and the second surveying arm 14.

The surveying table 20 comprises a cast holder 21 and an adjustment seat 22. The surveying table 20 is mounted on the platform 11. The cast holder 21 is used for clamping a cast 30 and provided with a clamp adjusting knob 211 for adjusting the clamping strength. A swivel ball 212 is arranged at the bottom of the cast holder 21, and a fine adjustment member 221 is arranged in the middle of the adjustment seat 22. A fine adjustment rotating knob 222 is screwed on the fine adjustment member 221, and the swivel ball 212 is clamped on the fine adjustment member 221. By rotating the fine adjustment rotating knob 222, the fine adjustment member 221 can be loosened to adjust the swivel ball 212. The angle and orientation of the cast holder 21 can be changed in accordance with the adjustment of the swivel ball 212. A swivel ball housing 23 is provided at the top of the adjustment seat 22 to confine the position of the swivel ball 212. A first adjustment screw O, a second adjustment screw P, and a third adjustment screw Q are locked on the adjustment seat 22. By moving the first adjustment screw O, the second adjustment screw P, or the third adjustment screw Q forward and backward, the positioning point height of the dental cast 30 clamped on the cast holder 21 corresponding to the first adjustment screw O, the second adjustment screw P, or the third adjustment screw Q is changed to achieve the effect of a three-point positioning and adjustment.

According to the invention, the spindle bushing 143 is made of copper and manufactured by drilling a hole in the center of a copper column.

According to the invention, the bearing 108 is a thrust bearing having higher parallelism and accuracy when pivoting.

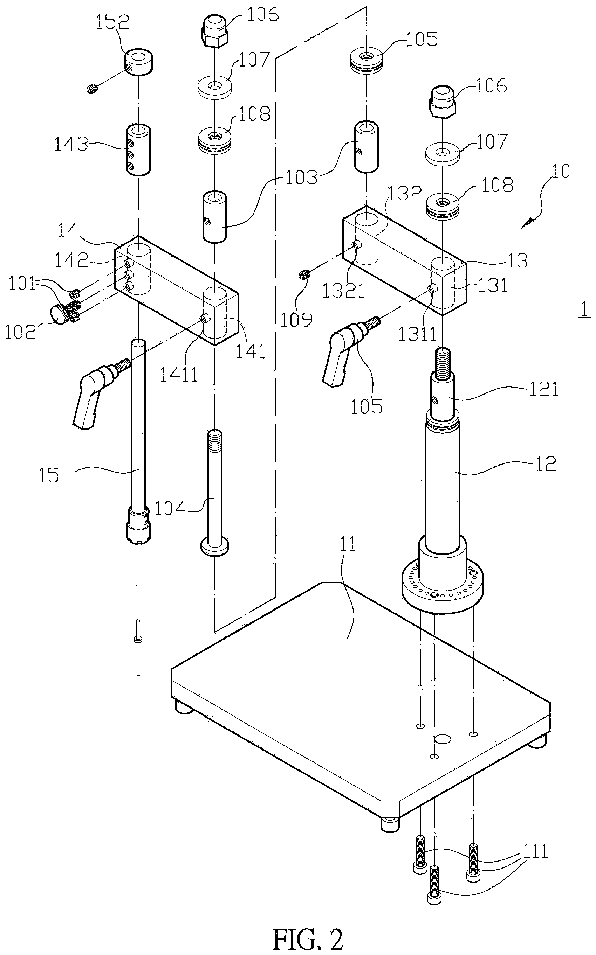

As shown in Fig. 2, the stand column 12 of the dental surveyor 1 is locked on the platform 11 by means of a plurality of bolts from the bottom up.

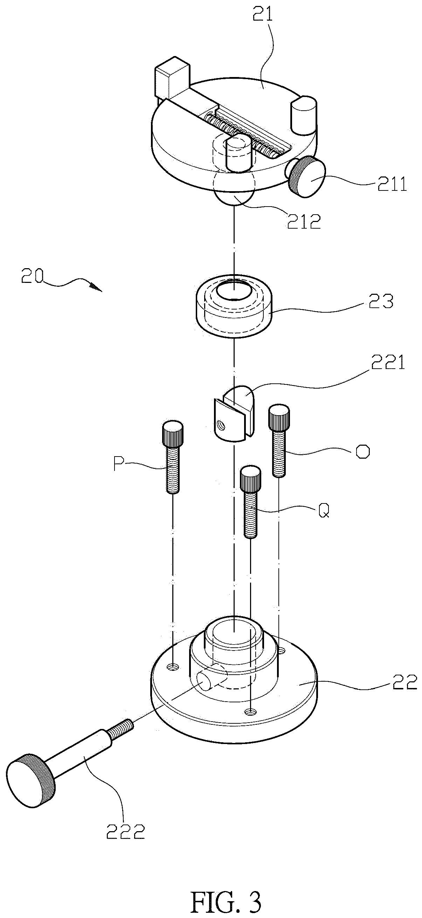

As shown in Fig. 3, the first adjustment screw O, the second adjustment screw P, and the third adjustment screw Q are evenly circularly arranged on the adjustment seat 22.

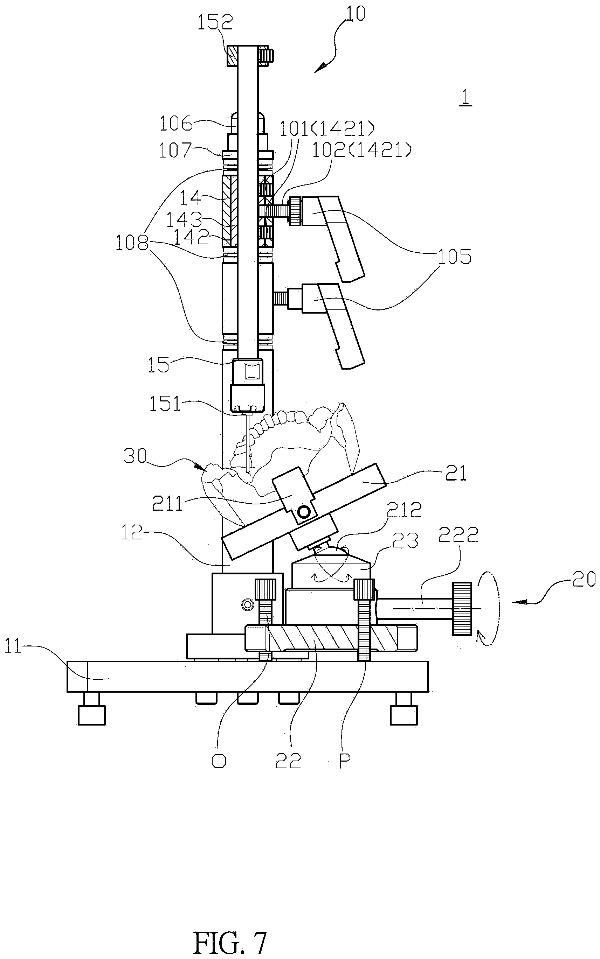

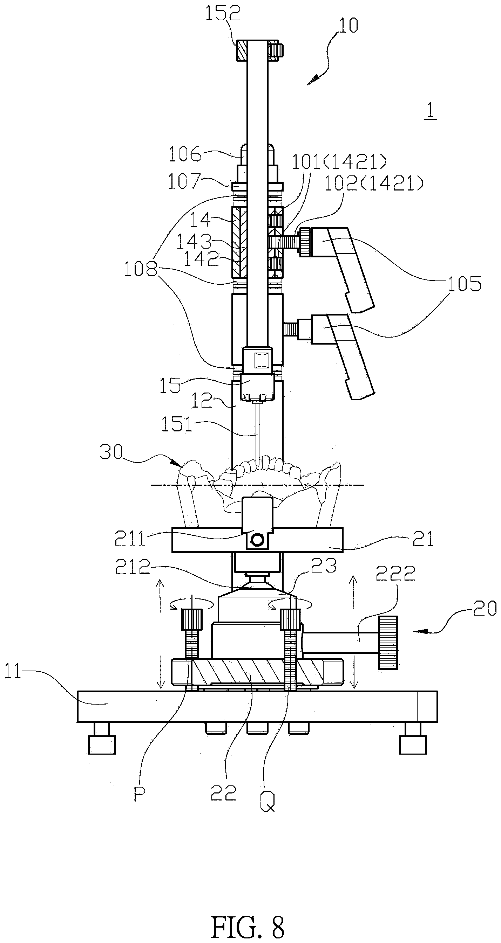

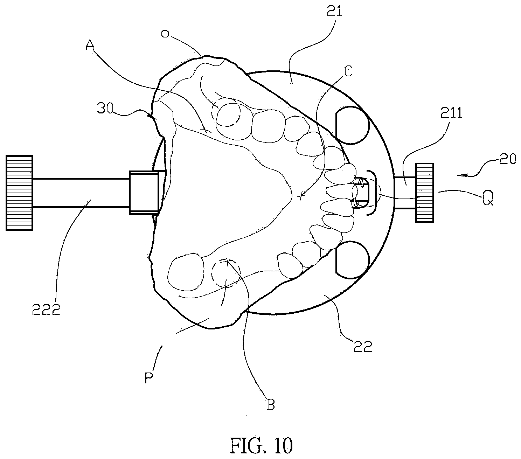

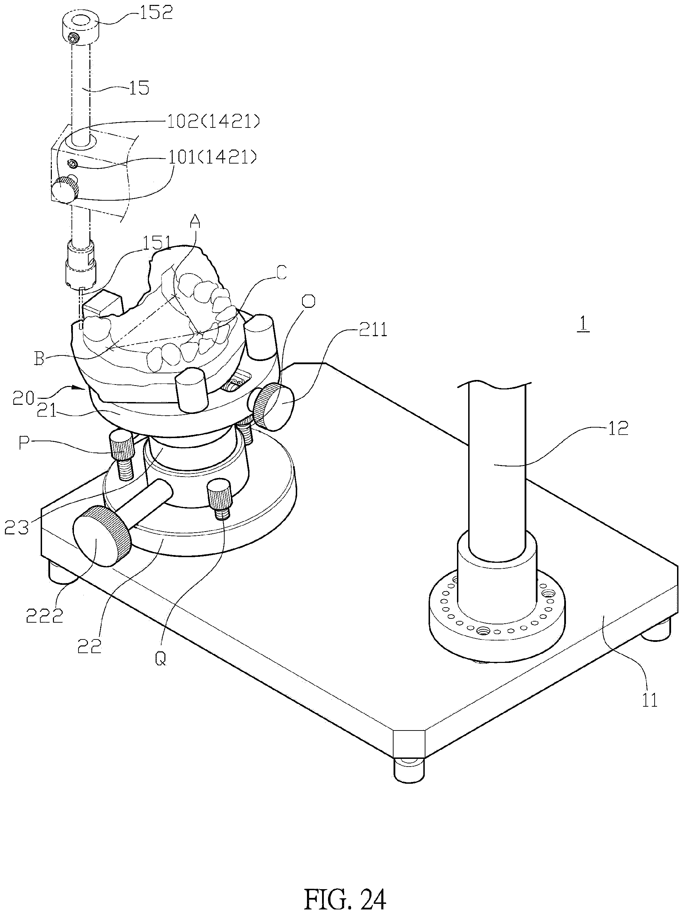

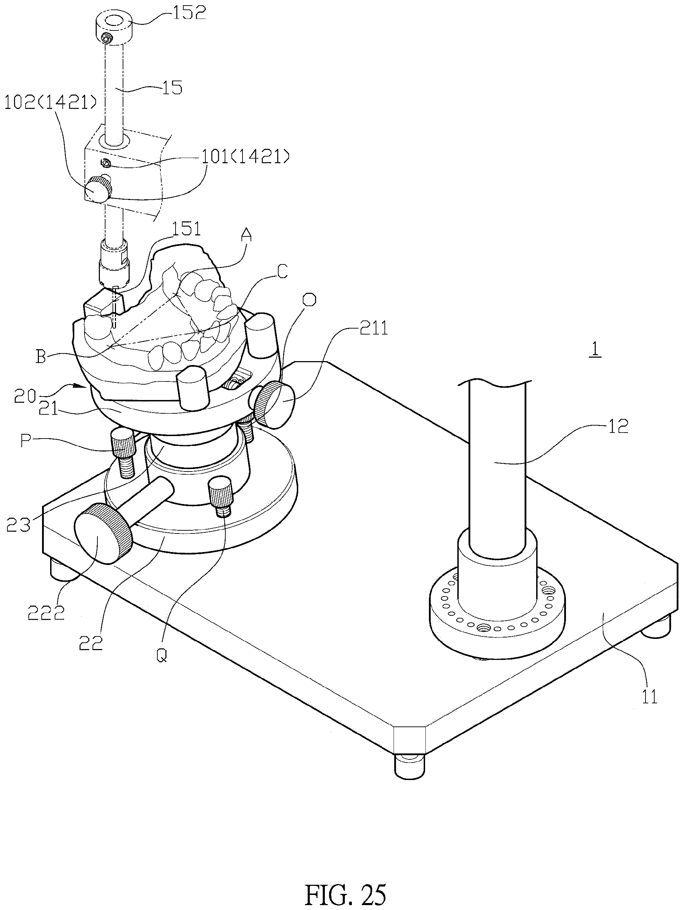

As shown in Fig. 7, the invention provides a surveying method for accurately determining the path of insertion and removal of a cast on the dental surveyor 1. The method is carried out with the following steps: The dentist adjusts the angle and orientation of the dental cast 30 with the fine adjustment rotating knob 222 to preliminarily determine the front-back and left-right inclinations of the cast 30. As shown in Fig. 10, the front-back and left-right orientations of the cast 30 are brought to be respectively close to the first adjustment screw O, the second adjustment screw P, and the third adjustment screw Q. As shown in Fig. 8, when adjusting one of the first adjustment screw O, the second adjustment screw P, and the third adjustment screw Q, the other two ones will not be affected. Thus, it is possible to accurately adjust and determine the front-back and left-right inclinations of the cast 30 by adjusting the first adjustment screw O, the second adjustment screw P, and the third adjustment screw Q. Therefore, it can be ensured that the front-back and left-right orientations of the cast 30 can be accurately adjusted by adjusting the first adjustment screw O, the second adjustment screw P, and the third adjustment screw Q. As shown in Fig. 24 and Fig. 25, the stroke needle 151 surveys the teeth of the cast 30 and the survey result is to be used as a reference for the insertion angle when manufacturing the denture. This enables the cast technician to accurately adjust and determine the insertion and removal path of the cast 30 and thus to manufacture a proper denture capable of being worn at a better angle.

As shown in Fig. 7 to Fig. 11, the invention provides a surveying method for recording and reproducing the path of insertion and removal of the cast on the dental surveyor 1. The method is carried out with the following steps: Step 1: Recording the path of insertion and removal of the cast 30: After surveying the cast 30 on the dental surveyor 1, the dentist determines the orientation and inclination of the cast 30, i.e., the path of insertion and removal. Subsequently, the dentist uses the tripoding method to select three separate contour points on the surface of the cast, i.e., a first positioning point A, a second positioning point B, and a third positioning point C. The dentist hands the cast 30 to a dental cast technician to reproduce the path of insertion and removal of the cast 30 and manufacture a corresponding denture. Step 2: Reproducing the path of insertion and removal of the cast: Before manufacturing the denture, the cast technician must reproduce the path of insertion and removal of the cast 30 determined by the dentist on the dental surveyor 1. The cast technician adjusts the position and angle of the cast 30 on the dental surveyor 1 in such a way that the first positioning point A, the second positioning point B, and the third positioning point C are finally located at the same height. In this way, the path of insertion and removal of the cast 30 is reproduced.

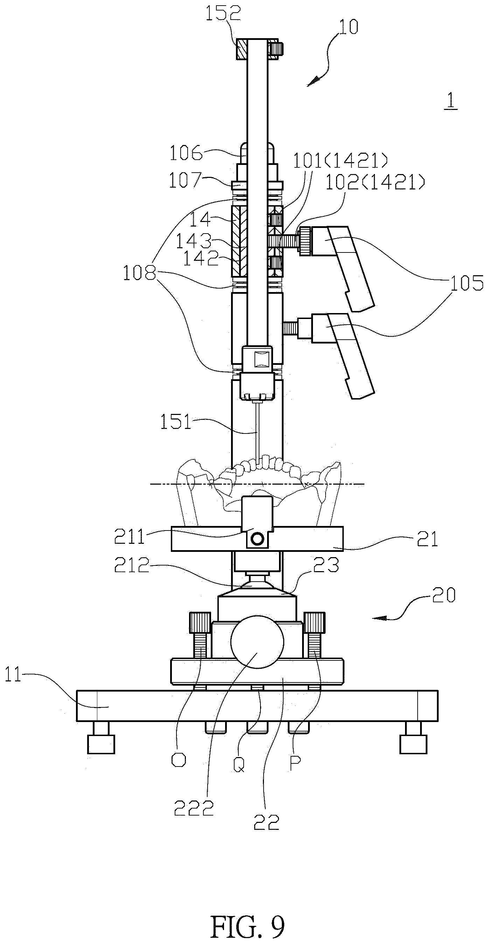

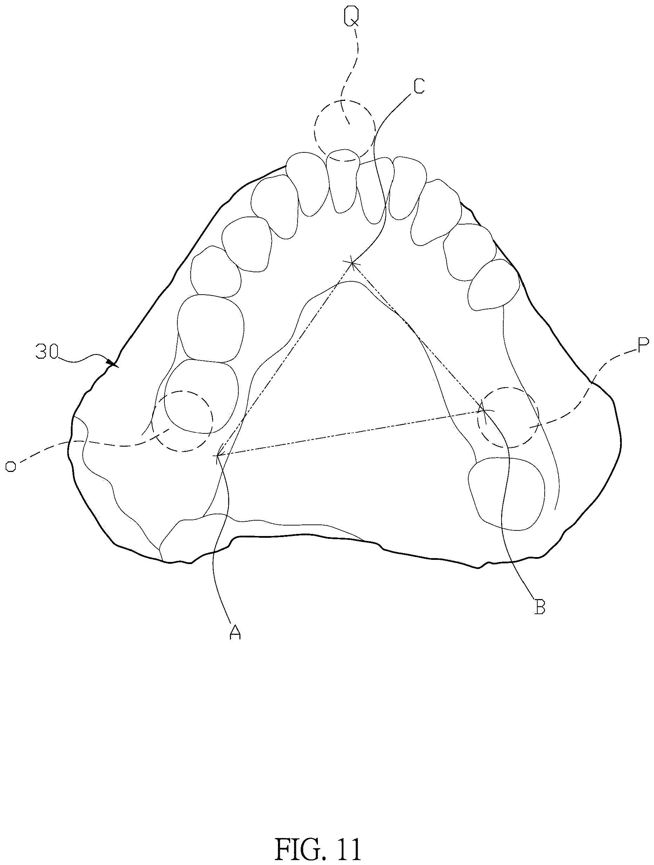

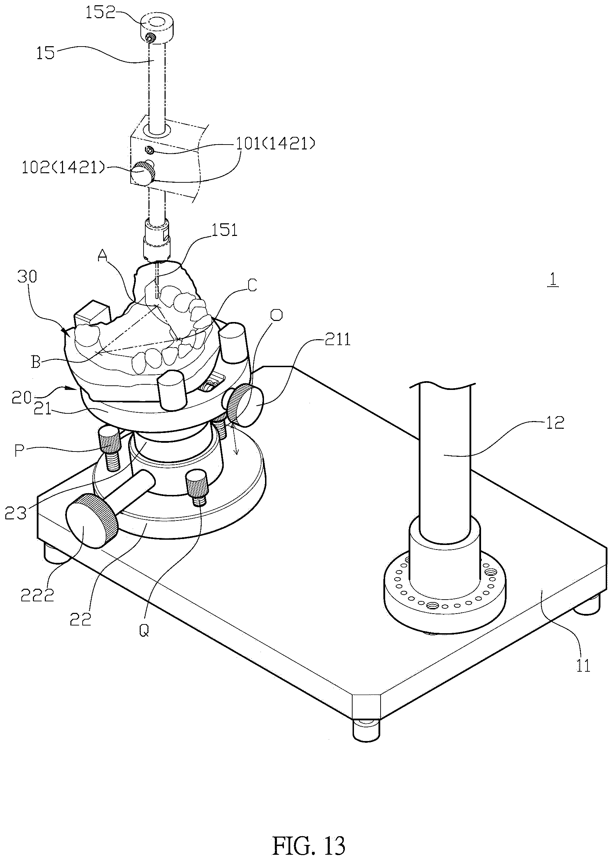

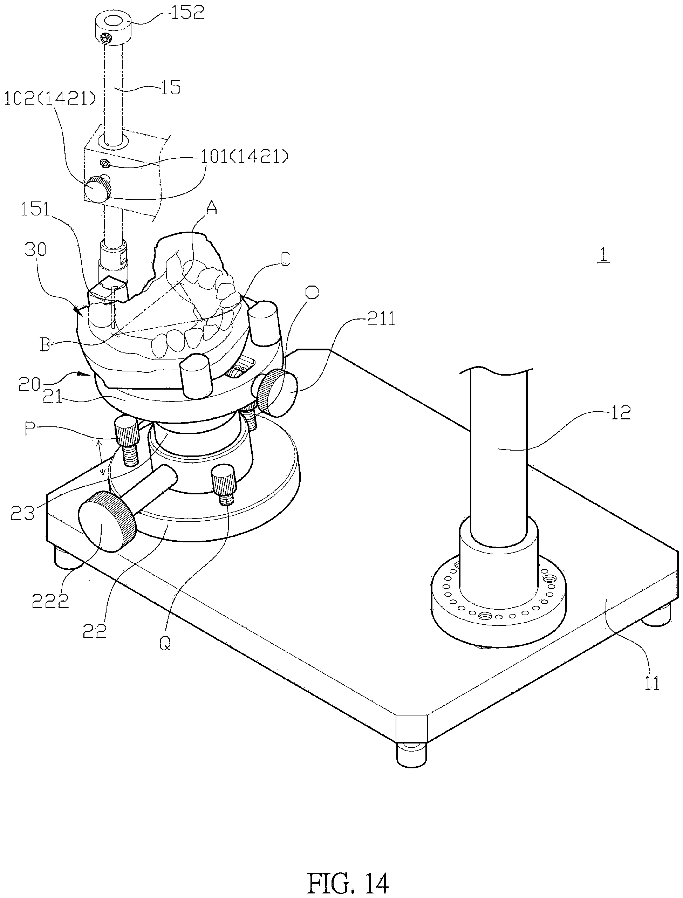

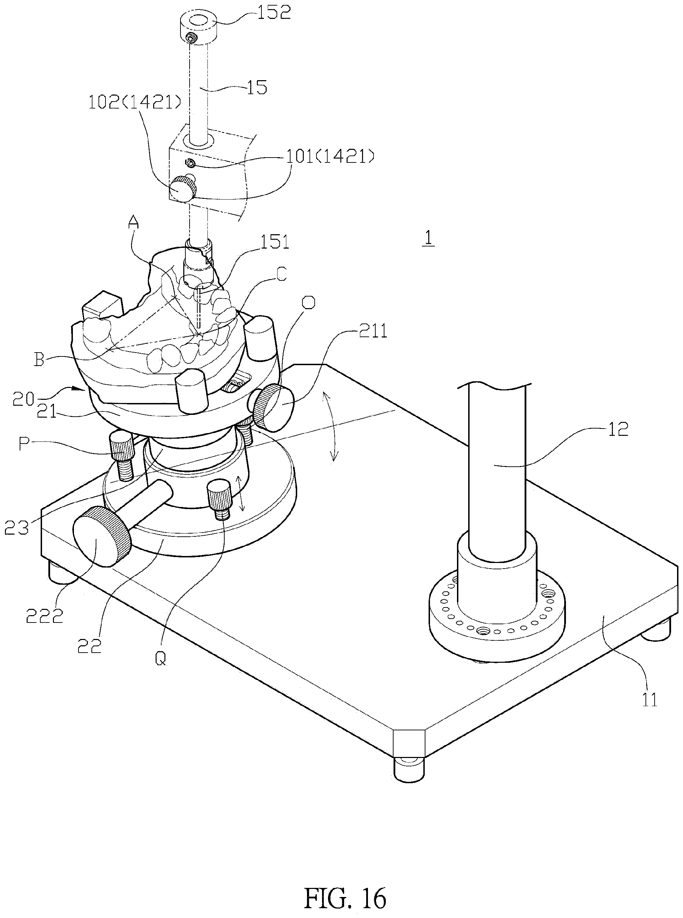

As shown in Fig. 11, the invention provides a surveying method for repositioning the path of insertion and removal of a cast on the dental surveyor 1. The method is carried out with the following steps to achieve the result that the chosen contour points on the surface of the cast 30, i.e., a first positioning point A, a second positioning point B, and a third positioning point C, are finally located at the same height. The first positioning point A, the second positioning point B, and the third positioning point C form a triangle. As shown in Fig. 7, the fine adjustment rotating knob 222 is rotated to loosen the fine adjustment member 221, so as to adjust the swivel ball 212, thereby changing the angle and orientation of the cast holder 21. As shown in Fig. 9 and Fig. 10, by adjusting the angle and orientation of the cast 30, the first positioning point A, the second positioning point B, and the third positioning point C are brought to be respectively close to the first adjustment screw O, the second adjustment screw P, and the third adjustment screw Q and to be at the same height as far as possible. In this way, the preliminary calibration of the cast 30 is completed. Further, as shown in Fig. 13 and Fig. 14, the second adjustment screw P is used as a reference at first. Then, the height of the second positioning point B is measured with the tip of the stroke needle 151, and the first adjustment screw O is adjusted to adjust the height of the first positioning point A in such a way that the first positioning point A is at the same height as the second positioning point B. Thereafter, the height is confirmed with the stroke needle 151. As shown in Fig. 16, the third adjustment screw Q is adjusted to adjust the height of the third positioning point C in such a way that the third positioning point C is at the same height as the first positioning point A. Thereafter, as shown in Fig. 13, the first adjustment screw O is adjusted to adjust the height of the first positioning point A in such a way that the first positioning point A is at the same height as the second positioning point B. After repeated adjustments, the first positioning point A, the second positioning point B, and the third positioning point C are at the same height, enabling the cast 30 to be in the correct angle and orientation, which is beneficial to the collaborative work of doctors and cast technicians and contributes thus to further improvement of work efficiency and accuracy of denture manufacturing.

The surveying method for the dental surveyor of the present invention is explained in detail as follows: the angle and orientation of the cast 30 are adjusted by the fine adjustment rotating knob 222 to preliminarily determine the front-back and left-right inclinations of the cast, so that the first positioning point A, the second positioning point B, and the third positioning point C are respectively close to the first adjustment screw O, the second adjustment screw P, and the third adjustment screw Q. Therefore, it can be ensured that the height change amount of one point can be higher than that of the other two when the first adjustment screw O, the second adjustment screw P, or the third adjustment screw Q is adjusted to adjust the first positioning point A, the second positioning point B, or the third positioning point C.

For the method of repositioning the path of insertion of a cast on dental surveyor, please refer to Figures 7 to 10, the. Step 1: Use the fine adjustment rotating knob 222 to adjust the angle and position of the cast 30 in such a way that the first positioning point A, the second positioning point B, and the third positioning point C on the cast are respectively close to the first adjustment screw O, the second adjustment screw P, and the third adjustment screw Q, and the first positioning point A, the second positioning point B, and the third positioning point C are nearly at the same height.

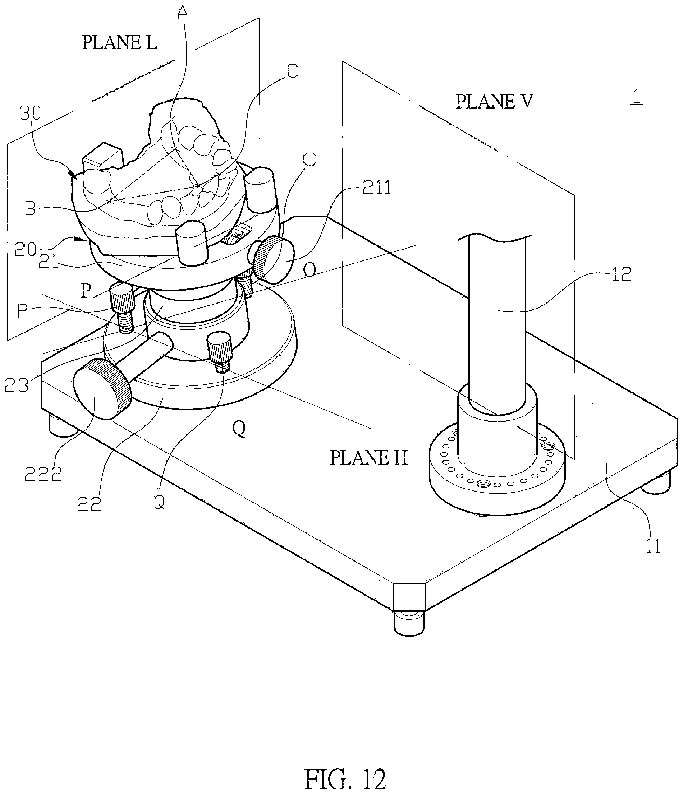

As shown in Fig. 12, applying the principles of projective geometry, the first adjustment screw O, the second adjustment screw P, and the third adjustment screw Q projected on the H plane, the V plane, and the L plane are referred to as points O, P, and Q, and the lines connecting two of the three are referred to as OP line, PQ line, and OQ line.

Furthermore, the first positioning point A, the second positioning point B, and the third positioning point C projected onto the H plane, the V plane, and the L plane are referred to as points A, B, and C below to facilitate reading and understanding.

As shown in FIG. 12, applying the principles of projective geometry, it is assumed that point O is the contact point between the first adjusting screw O and the platform 11, point P is the contact point between the second adjusting screw P and the platform 11, point Q is the contact point between the third adjusting screw Q and the platform 11. There are an H plane, a V plane and an L plane in the three-dimensional coordinate system. The H plane is an imaginary plane of the platform 11. Points O, P and Q must be in the H plane. The V plane is the plane through which the OP line passes and is perpendicular to the OP line. The L plane is the plane through which the PQ line passes and is perpendicular to the PQ line. The V plane and the L plane are respectively perpendicular to the H plane, but the V plane and the L plane are not necessarily perpendicular to each other.

As shown in Figures 13 to 14, a method for repositioning the path of insertion of a cast on dental surveyor is shown. Step 2: Use the first adjusting screw O to adjust the height of the first positioning point A, and use the second adjusting screw P to adjust the height of the second positioning point B, so that the first positioning point A and the second positioning point B are at the same height.

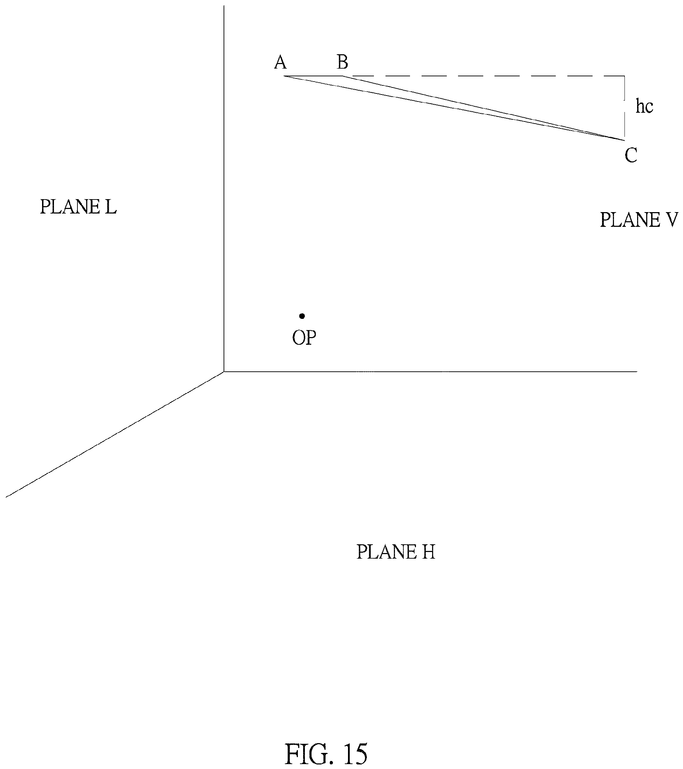

As shown in FIG. 15, applying the principles of projective geometry, in the projection diagram of points A, B, and C on the V plane, the points A and B are at the same height, point C is relatively low, the height difference between the three points is hc, and the OP line coincides at one point.

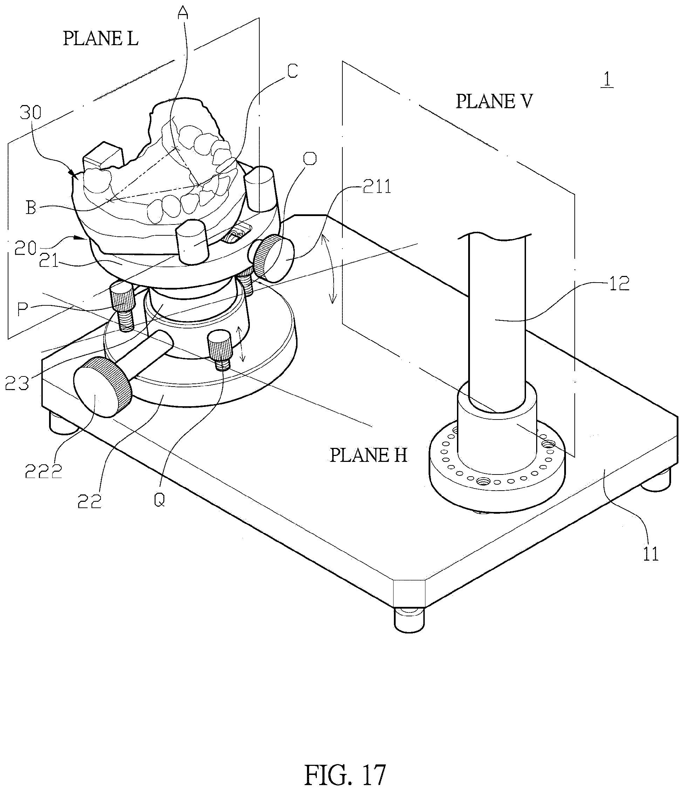

As shown in FIG. 16, in step 3, the height of the third positioning point C is adjusted with the third adjustment screw Q in such a way that the first positioning point A and the third positioning point C are at the same height. As shown in FIG. 17, at this time, the points A, B, and C rotate around the OP line which serves as the axis.

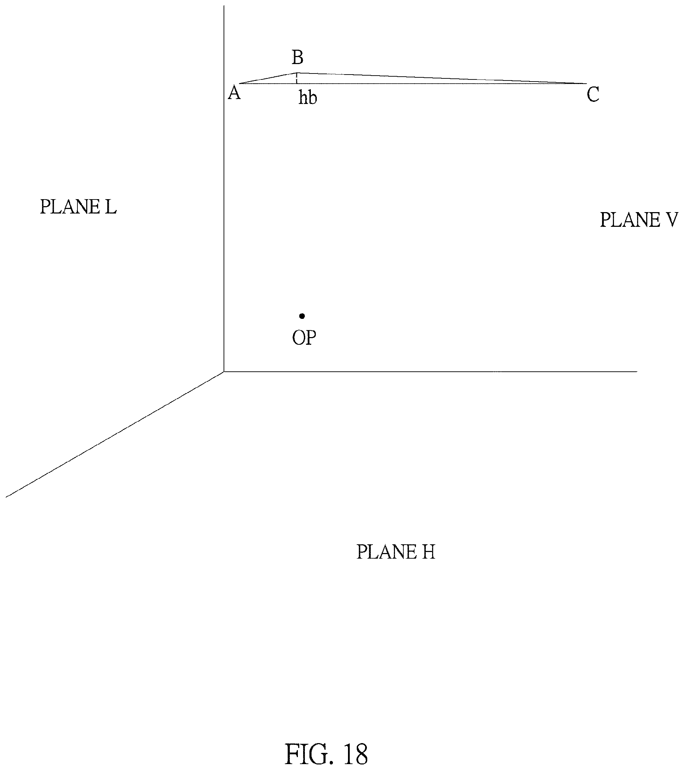

As shown in FIG. 18, applying the principles of projective geometry, in the projection diagram of the V plane, point A, point B, and point C rotate around OP as the axis in such way that point A and point C are at the same height. The original relationship between point A and point B in step 2, which refers to the same height of point A and point B, has changed. The height difference between the three points is hb, and the mathematical relation is hc:hb=AC:AB, wherein hc is much larger than hb. It is obvious that the height difference between the three points has been reduced.

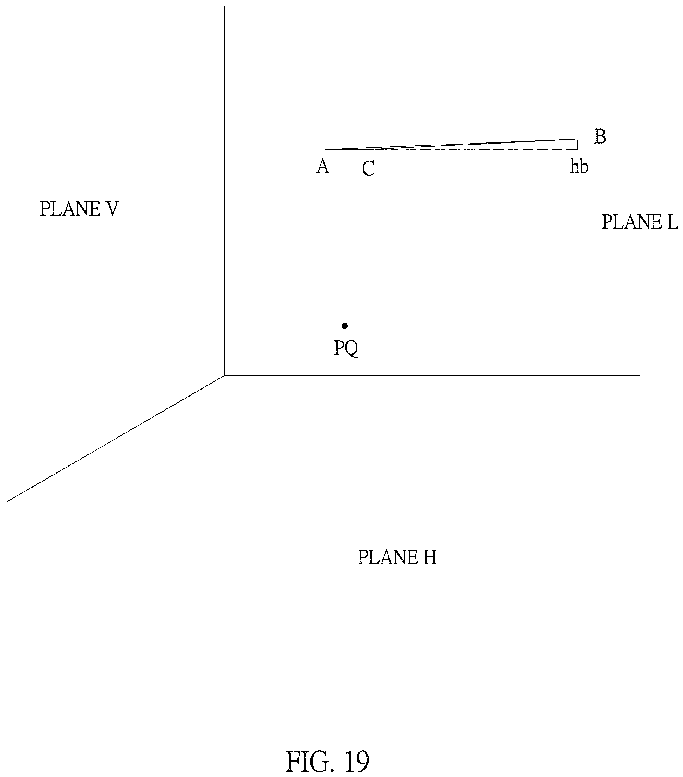

As shown in FIG. 19, applying the principles of projective geometry, in the projection diagram of point A, point B, and point C on the L plane, point A and point C are at the same height while point B is higher. The height difference between the three points is hb, and the PQ line coincides at one point.

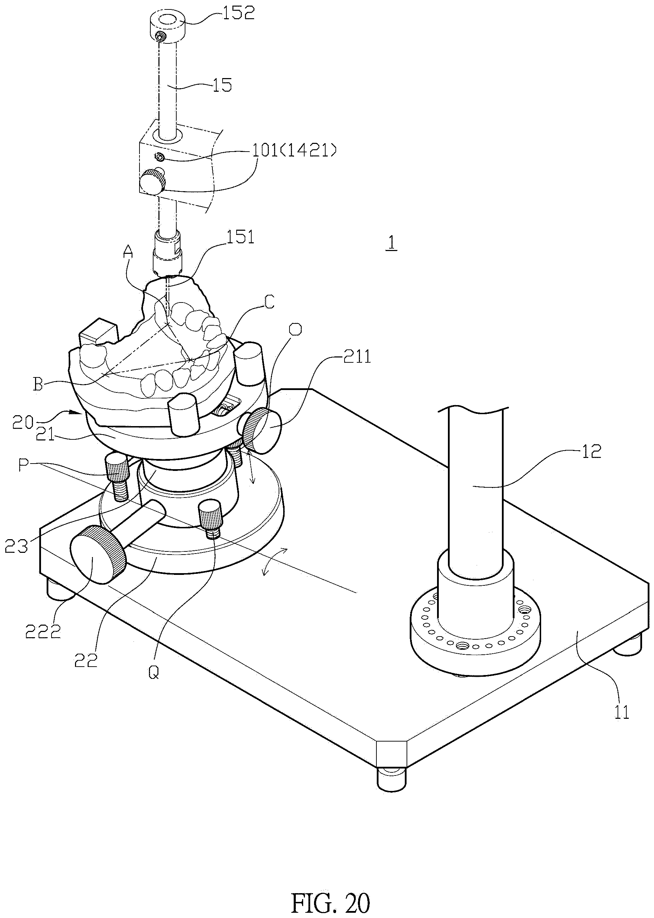

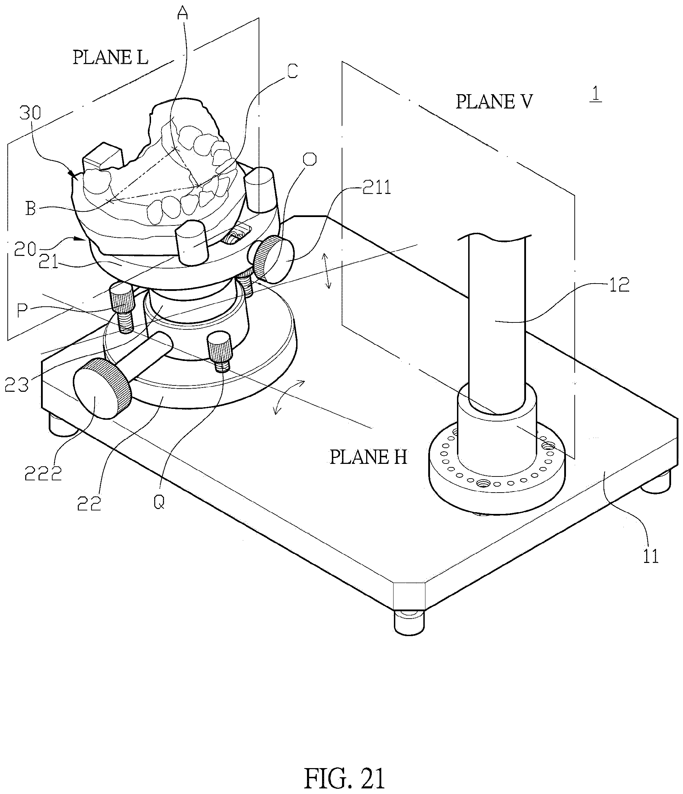

As shown in FIG. 20, in step 4, the height of the first positioning point A is adjusted with the first adjustment screw O in such a way that the first positioning point A is at the same height as the second positioning point B. As shown in FIG. 21, at this time, points A, B, and C rotate around the PQ line which serves as the axis.

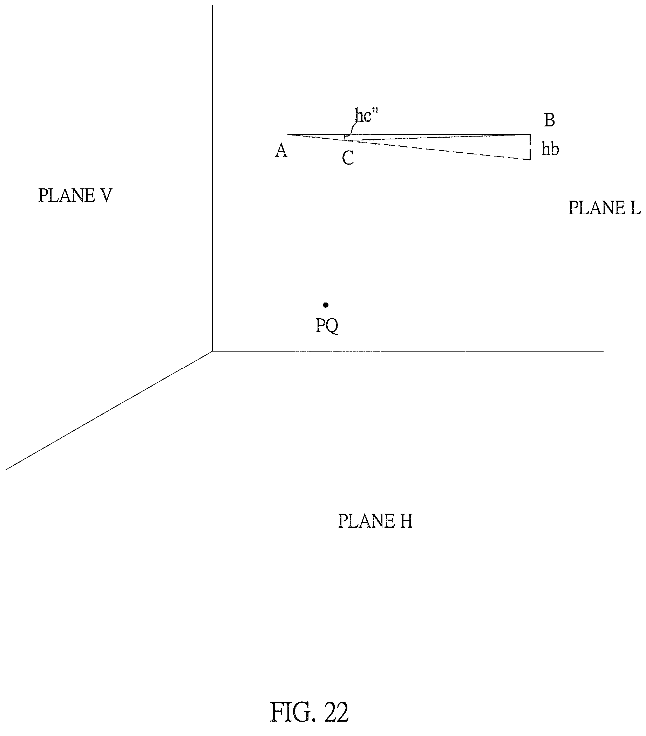

As shown in FIG. 22, applying the principles of projective geometry, at this time, in the projection diagram of point A, point B, and point C on the L plane, point A and point B are at the same height while point C is lower. The height difference between the three points is hc", and the PQ line coincides at one point.

Based on the above principles, we can find that the height difference of the three points shrinks from hc to hb, and then to hc", gradually decreasing to an almost indistinguishable size, thus making the three points equal in height.

Therefore, by repeatedly adjusting the height of the adjustment screws, the height difference between the three positioning points will become smaller and smaller until the first positioning point A, the second positioning point B, and the third positioning point C are at the same height. The user can adjust the dental cast 30 to the correct angle and orientation to complete the repositioning of the dental cast on the dental surveyor.

As shown in FIG. 24 and FIG. 25, the stroke needle 151 surveys the teeth of the dental cast 30. The result of the survey serves as a reference for the angle in which the denture is put in the mouth when manufacturing the denture, so that the manufactured denture can be worn at a proper angle.

In summary, the dental surveyor and the surveying method of the present invention have the following advantages: (i) Precisely adjusting and determining the path of insertion and removal of the dental cast 30: When adjusting one of the first adjustment screw O, the second adjustment screw P, or the third adjustment screw Q, the other two will not be affected at the same time, so the front-back and left-right inclinations of the dental cast 30 can be accurately adjusted; (ii) The angle and orientation of the cast 30 can be adjusted by means of the adjustment base 22 in such a way that the first positioning point A, the second positioning point B, and the third positioning point C can be preliminarily brought close to the first adjustment screw O, the second adjustment screw P, and the third adjustment screw Q respectively, and at the same time, the first positioning point A, the second positioning point B, and the third positioning point C are at the same height as far as possible, so as to quickly complete the preliminary calibration; (iii) The local height of the cast 30 can be adjusted by the first adjustment screw O, the second adjustment screw P, and the third adjustment screw (Q), so that the tripoding can be performed quickly, intuitively, simply, and accurately; (iv) The parallelism error caused by the axis hole tolerance between the first surveying arm 13 and the second surveying arm 14 and between the first surveying arm 13 and the stand column 12 can be eliminated using thrust bearings, and the verticality error caused by the axis hole tolerance between the vertical spindle 15 and the spindle bushing 143 can be eliminated using ball point set screws 101 so that the stand column 12, the first surveying arm 13, the second surveying arm 14, and the vertical spindle 15 can pivot relative to each other, maintaining extremely high parallelism and verticality; (V) The stand column 12, the first surveying arm 13, and the second surveying arm 14 can pivot relative to each other, and the heights of the first positioning point A, the second positioning point B, and the third positioning point C can be quickly measured using the stroke needle 151, as to survey the cast 30, thereby improving efficiency; (vi) Ap-pling the surveying method of the present invention, it is possible to iteratively approximate between the third positioning point C and the second positioning point B to reduce the height error after the first positioning point A and the second positioning point B are adjusted to the same height, so as to quickly bring the first positioning point A, the second positioning point B, and the third positioning point C in a state of equal height, so that the cast 30 is in the correct angle and orientation, which is beneficial to the collaborative work of doctors and dental cast technicians and contributes thus to further improvement of work efficiency.

Although the present invention has been explained in relation to its preferred embodiment, it is to be understood that many other possible modifications and variations can be made without departing from the spirit and scope of invention as hereinafter claimed.

## Claims

1. A dental surveyor comprising a surveyor and a surveying table, **characterized in that**:
- The surveyor comprises a platform, a stand column, a first surveying arm, a second surveying arm, and a vertical spindle. The stand column is locked on the platform. The first surveying arm is pivotally connected to the stand column, and the second surveying arm is pivotally connected to the first surveying arm. Thus, the stand column, the first surveying arm, and the second surveying arm are pivotally connected with each other. The second surveying arm is equipped with a vertical spindle having a stroke needle for surveying a cast; and
- The surveying table comprises a cast holder and an adjustment seat. The surveying table is mounted on the platform. The cast holder is used for clamping the cast and provided with a clamp adjusting knob for adjusting the clamping strength. A swivel ball is arranged at the bottom of the cast holder, and a fine adjustment member is arranged in the middle of the adjustment seat. A fine adjustment rotating knob is screwed on the fine adjustment member, and the swivel ball is clamped on the fine adjustment member. By rotating the fine adjustment rotating knob, the fine adjustment member can be loosened to adjust the swivel ball. The angle and orientation of the cast holder can be changed in accordance with the adjustment of the swivel ball. A swivel ball housing is provided at the top of the adjustment seat to confine the position of the swivel ball. A first adjustment screw, a second adjustment screw, and a third adjustment screw are locked on the adjustment seat. By moving the first adjustment screw, the second adjustment screw, or the third adjustment screw forward and backward, the heights of those places of the dental cast clamped on the cast holder, which places correspond to the first adjustment screw, the second adjustment screw, or the third adjustment screw, are changed to achieve the effect of a three-point positioning and adjustment.

2. The dental surveyor as claimed in claim 1, wherein the stand column is locked on the platform. A pivot pin is arranged at the top of the stand column. An axis hole and a first bearing hole are formed on the first surveying arm in such a way that they go completely through the first surveying arm. A first insertion hole and a second insertion hole are bored respectively on a side of the axis hole and the first bearing hole. The pivot pin of the stand column is inserted in the axis hole. A second bearing hole and a vertical spindle hole are formed on the second surveying arm in such a way that they go completely through the second surveying arm. A third insertion hole and three fourth insertion holes are bored respectively on a side of the second bearing hole and the vertical spindle hole. A spindle bushing is mounted in the vertical spindle hole. A plurality of ball point set screws is locked in the fourth insertion holes to fit the spindle bushing in the fourth insertion holes. The vertical spindle is inserted in the spindle bushing and can be equipped with a stroke needle for surveying a dental cast. A stop portion is locked at the top of the vertical spindle in such a way that the stop portion abuts on the spindle bushing to confine the movement range of the vertical spindle. The ball point set screws are locked respectively in the upper and lower fourth insertion holes. The ball point set screws apply an average pressure on the vertical spindle to eliminate the tolerance of the vertical spindle in the spindle bushing to improve the accuracy. A locking screw is locked in middle fourth insertion hole in such a way that the locking screw abuts on the vertical spindle. By tightening or loosen the locking screw, the position of the vertical spindle can be adjusted and fixed. A slide bushing is inserted into each of the first and second bearing holes. A fulcrum pin is inserted through the two slide bushings. A set screw is locked in the second insertion hole in such a way that the set screw abuts against the fulcrum pin to fix the fulcrum pin, so that the stand column, the first surveying arm, and the second surveying arm can pivot relative to each other. The first surveying arm is locked on the first insertion hole and the pivot pin by means of a clamping threaded lever and is used for adjusting and fixing the angle between the stand column and the first surveying arm. The second surveying arm is locked on the third insertion hole by means of a clamping threaded lever in such a way that the second surveying arm abuts against the fulcrum pin. The second surveying arm is used for adjusting and fixing the angle between the first surveying arm and the second surveying arm. A screw cap is arranged at the top of each of the pivot pin and the fulcrum pin to confine the position of these tops. The first and second surveying arms are respectively provided with a plurality of washers and a plurality of bearings to enhance the smoothness of the pivot, so as to achieve a mutually pivoting linkage relationship between the stand column, the first surveying arm, and the second surveying arm.

3. The dental surveyor as claimed in claim 2, wherein the spindle bushing is made of copper and manufactured by drilling a hole in the center of a copper column.

4. The dental surveyor as claimed in claim 2, wherein the bearing is a thrust bearing.

5. The dental surveyor as claimed in claim 2, wherein the stand column of the dental surveyor is locked on the platform by means of a plurality of bolts from the bottom up.

6. The dental surveyor as claimed in claim 2, wherein the first adjustment screw, the second adjustment screw, and the third adjustment screw are evenly circularly arranged on the adjustment seat.

7. A surveying method for accurately determining the path of insertion and removal of a dental cast on a surveyor using the dental surveyor as claimed in one of the claims 1 to 6, wherein the method is carried out with the following steps: The dentist preliminarily determines the front-back and left-right inclinations of the cast by adjusting the angle and orientation of the dental cast using the fine adjustment rotating knob so that the front-back and left-right orientations of the cast are respectively close to the positions of the first adjustment screw, the second adjustment screw, and the third adjustment screw. Therefore, it can be ensured that the front-back and left-right orientations of the cast can be accurately adjusted by adjusting the first adjustment screw, the second adjustment screw, and the third adjustment screw.

8. A surveying method for recording and reproducing the path of insertion and removal of a dental cast on a surveyor using the dental surveyor as claimed in one of the claims 1 to 6, wherein the method is carried out with the following steps:
Step 1: Recording the path of insertion and removal of the dental cast: After surveying the cast on the dental surveyor, the dentist determines the orientation and inclination of the cast, i.e., the path of insertion and removal. Subsequently, the dentist uses the tripoding method to select three separate contour points on the surface of the cast, i.e., a first positioning point, a second positioning point, and a third positioning point. The dentist hands the cast to a dental cast technician to reproduce the path of insertion and removal of the cast and manufacture a corresponding denture; and
Step 2: Reproducing the path of insertion and removal of the dental cast: Before manufacturing the denture, the cast technician must reproduce the path of insertion and removal of the cast determined by the dentist on the dental surveyor. The cast technician adjusts the position and angle of the cast on the dental surveyor in such a way that the first positioning point, the second positioning point, and the third positioning point are finally located at the same height. In this way, the path of insertion and removal of the cast is reproduced.

9. A surveying method for repositioning the path of insertion and removal of a dental cast on a surveyor using the dental surveyor as claimed in one of the claims 1 to 6, wherein the method is carried out with the following steps to achieve the result that the chosen, i.e., a first positioning point, a second positioning point, and a third positioning point, are finally located at the same height.:
- Step 1: Preliminary calibration: Contour points on the surface of the cast, which points are at the same height, are chosen, wherein these points are a first positioning point, a second positioning point, and a third positioning point which form a triangle; By rotating the fine adjustment rotating knob, the fine adjustment member can be loosened to adjust the swivel ball. The angle and orientation of the cast holder can be changed in accordance with the adjustment of the swivel ball in such a way that the first positioning point, the second positioning point, and the third positioning point are respectively close to the first adjustment screw, the second adjustment screw, and the third adjustment screw, and at the same time the first positioning point, the second positioning point, and the third positioning point are at the same height as far as possible; and
- Step 2: Accurate calibration: First, using the second adjustment screw as a reference, use the tip of the stroke needle to measure the height of the second positioning point, and adjust the first adjustment screw to adjust the height of the first positioning point so that the first positioning point is at the same height as the second positioning point; confirm the height with the stroke needle, then adjust the third adjustment screw to adjust the height of the third positioning point so that the first positioning point is at the same height as the third positioning point; adjust the first adjustment screw to adjust the height of the first positioning point so that the first positioning point is at the same height as the second positioning point. After repeated adjustments, the first positioning point, the second positioning point, and the third positioning point are at the same height, enabling the cast to be in the correct angle and orientation.
